# EUROPÄISCHE PATENTSCHRIFT

(11) **EP 1 055 100 B1**
(45) Veröffentlichungstag und Bekanntmachung des Hinweises auf die Patenterteilung: **24.10.2001**
(21) Anmeldenummer: 99904873.9
(22) Anmeldetag: 09.02.1999
(51) Int. Cl.: G01D 5/347

(54) **OPTOELEKTRONISCHES WEG-, WINKEL- ODER ROTATIONSMESSGERÄT**
OPTOELECTRONIC PATH-, ANGLE- OR ROTATION-MEASURING DEVICE
DISPOSITIF OPTO-ELECTRONIQUE DE MESURE DE DISTANCE, D'ANGLE OU DE ROTATION

(30) Priorität: 10.02.1998 DE 19805309
(43) Veröffentlichungstag der Anmeldung: 29.11.2000
(73) Patentinhaber: Dr. Johannes Heidenhain GmbH, 83292 Traunreut (DE)
(72) Erfinder: FRANZ, Heinz-Günther, D-22359 Hamburg (DE); HOLZAPFEL, Wolfgang, D-83119 Obing (DE)
(86) Internationale Anmeldenummer: EP9900838
(87) Internationale Veröffentlichungsnummer: WO9941570

(56) Entgegenhaltungen:
- EP-A- 0 564 683
- DE-C- 3 738 977
- PATENT ABSTRACTS OF JAPAN vol. 009, no. 163 (P-371), 9. Juli 1985 -& JP 60 040903 A (NIPPON DENSHIN DENWA KOSHA), 4. März 1985
- PATENT ABSTRACTS OF JAPAN vol. 097, no. 006, 30. Juni 1997 & JP 09 033221 A (MITSUTOYO CORP), 7. Februar 1997

## Beschreibung

Die Erfindung bezieht sich auf ein optoelektronisches Weg-, Winkel- oder Rotationsmeßgerät.

Bei optoelektronischen Weg-, Winkel- oder Rotationsmeßgeräten wird mindestens eine Codespur eines Codeträgers oder Encoders beleuchtet und mißt ein Sensor die Intensitätsänderung des Lichtes durch die Codespur, die sich bei einer Bewegung des Codeträgers einstellt. Beim Durchlichtverfahren ist eine Lichtquelle so angeordnet, daß ihr Lichtstrahl durch einen transparenten Codeträger fällt, bei dem die Hell- und Dunkelfelder als mehr- und weniger lichtdurchlässige Bereiche ausgebildet sind. Beim Auflichtprinzip wird eine Codespur bestrahlt, deren Hell- und Dunkelfelder das Licht mehr oder weniger reflektieren.

Bei sehr feiner Teilung der Codespur in Hell- und Dunkelfelder ist der Einsatz einer Schlitzblende unumgänglich, die entsprechend den Hell- und Dunkelfeldern der Codespur in mehr und weniger lichtdurchlässige Bereiche unterteilt ist. Infolgedessen fällt nur bei deckungsgleicher Positionierung von Codespur und Schlitzblende die maximale Lichtmenge durch. Ein optoelektronischer Sensor, der auf der von der Lichtquelle abgewandten Seite dieser Anordnung positioniert ist, empfängt infolgedessen ein gut durchmoduliertes Lichtsignal. Jeder Codespur ist ein Fotosensor zugeordnet, der das durchgelassene Lichtsignal empfängt.

Dabei kann jeder Codespur ein separates fotoelektronisches Bauteil zugeordnet sein. Dies ist auch bei sogenannten Opto-Arrays der Fall, die mehrere Fotosensoren zu einem Bauteil zusammenfassen. Die genaue Ausrichtung der Blende auf das fotoelektronische Bauteil sowie zum Codeträger ist problematisch.

Deshalb wird von der EP 0 564 683 A1 ein optoelektronisches Weg-, Winkel- oder Rotationsmeßgerät vorgeschlagen, bei dem auf der vom Codegeber abgewandten Seite einer plattenförmigen Blendeneinrichtung ein optoelektronischer Sensor angeordnet ist, der der plattenförmigen Blendeneinrichtung zugewandte Kontaktstellen hat, die elektrische Leiterbahnen auf dieser Seite der plattenförmigen Blendeneinrichtung kontaktieren. Die Blendenstruktur kann in einer Beschichtung der plattenförmigen Blendeneinrichtung ausgebildet sein.

Dieser Aufbau ist in der Herstellung aufwendig. Die Blendenstruktur kann beim Aufbringen des Halbleiterchips auf die plattenförmige Blendeneinrichtung beschädigt werden. Wenn ein Anwendungsfall eine andere Blendenstruktur erfordert, muß eine völlig neue plattenförmige Blendeneinrichtung hergestellt werden.

Neben dem Vorsehen einer Blendenstruktur vor lichtempfindlichen Sensor-flächen optoelektronischer Sensoren kann es im Fall bestimmter optischer Abtastprinzipien erforderlich sein, auch vor der jeweiligen Lichtquelle eine Blendenstruktur anzuordnen. Man spricht in diesem Fall auch von sog. Sendegittern, wie sie z.B. in einer Anordnung erforderlich sind, die in der DE 195 27 287 offenbart ist. Auch im Fall erforderlicher Sendegitter resultiert der oben diskutierte Aufwand bzw. die entsprechende Unflexibilität bei der Herstellung des entsprechenden Gerätes.

Davon ausgehend liegt der Erfindung die Aufgabe zugrunde, die Herstellung von optoelektronischen Weg-, Winkel- oder Rotationsmeßgeräten insbesondere auch im Hinblick auf die Verwirklichung verschiedener Blendenstrukturen zu vereinfachen.

Die Aufgabe wird durch ein Gerät mit den Merkmalen des Anspruches 1 gelöst. Vorteilhafte Ausgestaltungen des Gerätes sind in den Unteransprüchen angegeben.

Das optoelektronische Weg-, Winkel- oder Rotationsmeßgerät hat einen beleuchteten oder durchleuchteten Codeträger, der wenigstens eine Codespur mit reflektierenden und nicht-reflektierenden bzw. durchlässigen und undurchlässigen Hell- und Dunkelfeldern aufweist. Als Lichtquelle kann eine künstliche Lichtquelle aber auch Tageslicht etc. dienen. Ferner hat das Gerät ein im Weg des vom Codeträger modulierten Lichtes angeordnetes Blendenplättchen mit einer Blendenstruktur mit mehr lichtdurchlässigen und weniger lichtdurchlässigen Bereichen entsprechend den Hell- und Dunkelfeldern der Codespur, welches mit einem transparenten Substrat verbunden ist, das mindestens einen der Blendenstruktur zugewandten optoelektronischen Sensorchip trägt.

Neben der Anordnung der Blendenstruktur nur vor dem optoelektronischen Sensorchip kann in alternativen Ausführungsformen vorgesehen werden, eine erfindungsgemäß ausgebildete Blendenstruktur auch als Sendegitter vor der lichtemittierenden Fläche einer geeigneten Lichtquelle anzuordnen.

Das Blendenplättchen, das vorzugsweise ein Glasplättchen ist und eine die Blendenstruktur bildende Beschichtung, Ritzung oder Prägung etc. aufweisen kann, kann separat gefertigt werden. Für verschiedene Anwendungsfälle müssen deshalb nur unterschiedliche Blendenplättchen produziert werden. Das transparente Substrat mit dem darauf angeordneten Sensorchip bildet hingegen eine Zusammensetzung, die für eine Vielzahl von Anwendungsfällen in der gleichen Ausführung produziert werden kann. Blendenplättchen und Zusammensetzung können somit nach Art eines Baukastensystems für verschiedene Anwendungen vorgehalten werden.

Das transparente Substrat kann mit Leiterbahnen versehen sein, um den Chip an seinen Kontaktstellen mit den Leiterbahnen zu verbinden (sog. Flip-Chip-Montage"). Das transparente Substrat kann Glas, Kunststoff oder ein anderes dafür geeignetes Material sein, wobei im ersten Fall die Montage des Chips auch als "Chip-on-glass-Montage" bezeichnet wird. Der Chip kann überdies auf dem Substrat durch ein Vergußmittel geschützt werden.

Bevorzugt kann das Blendenplättchen mindestens einen Überstand über das transparente Substrat mit zur Blendenstruktur definierten Rändern aufweisen, die ein genaues Ausrichten der Blendenstruktur ermöglichen.

Das Verbinden des Blendenplättchens mit dem transparenten Substrat kann durch Verkleben oder durch andere Verbindungstechnologien erfolgen. Auch kann eine Verbindungstechnologie zur Anwendung kommen, die ein späteres Auswechseln des Blendenplättchens ermöglicht.

Die Erfindung wird nachfolgend anhand der anliegenden Zeichnungen einiger Ausführungsbeispiele näher erläutert. In den Zeichnungen zeigt:
- Figur 1: ein Blendenplättchen für ein Wegmeßgerät an einem Bauteil mit einer Flip-Chip-Montage in der Draufsicht;
- Figur 2: dieselbe Anordnung in einem funktionellen (das heißt die Leiterbahnen nicht genau wie in der Draufsicht gezeigten Anordnung wiedergebenden) Querschnitt;
- Figur 3: eine entsprechende Anordnung in einem Wegmeßgerät im Querschnitt;
- Figur 4: ein Blendenplättchen für ein Winkel- oder Rotationsmeßgerät in einem Bauteil mit einer Flip-Chip-Montage in der Draufsicht;
- Figur 5: dieselbe Anordnung in einem funktionellen Querschnitt;
- Figur 6: ein überstehendes Blendenplättchen an einem Bauteil mit einer Flip-Chip-Montage in der Draufsicht;
- Figur 7: dieselbe Anordnung in einem Querschnitt.

Bei der nachfolgenden Beschreibung verschiedener Ausführungsbeispiele sind übereinstimmende Elemente mit denselben Bezugsziffern bezeichnet. Die zugehörige Beschreibung hat für sämtliche Ausführungen Gültigkeit, die dieselbe Bezugsziffer verwenden.

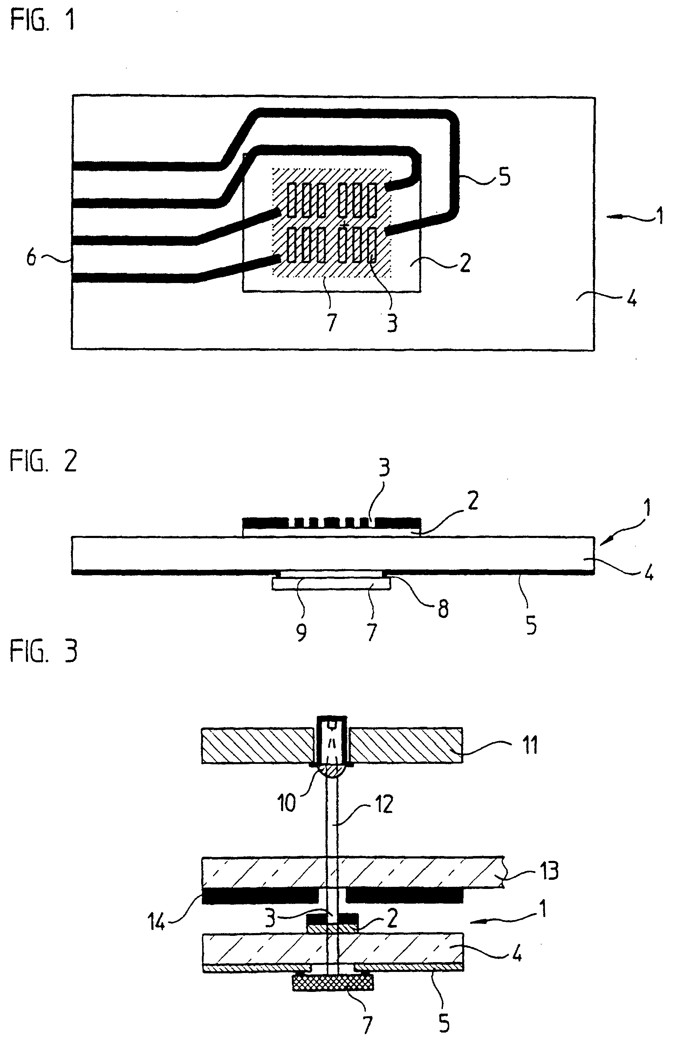

Das in den Figuren 1 und 2 gezeigte Bauteil 1 hat ein Blendenplättchen 2, das oben ("oben" and "unten" bezieht sich auf die Ausrichtung der Beispiele in den Zeichnungen) eine Blendenstruktur 3 aufweist. Die Blendenstruktur 3 ist im dargestellten Ausführungsbeispiel durch eine im wesentlichen lichtundurchlässige Schicht (z.B. eine Chromschicht) verwirklicht, die schlitzförmige Unterbrechungen aufweist, welche lichtdurchlässige Bereiche bilden, d.h. die Blendenstruktur 3 ist in diesem Fall als reines Amplitudengitter ausgebildet Die Blendenstruktur 3 weist in diesem Beispiel vier Gruppen mit je drei Schlitzen auf.

Alternativ zur Ausbildung der Blendenstruktur 3 als reines Amplitudengitter sind selbstverständlich auch andere Varianten je nach optischem Abtastprinzip einsetzbar. So kann die Blendenstruktur 3 etwa auch als bekanntes Transmissions-Phasengitter ausgebildet werden oder aber als Kombination aus einem Amplitudengitter und einem Phasengitter. Letzteres kann etwa dergestalt erfolgen, daß in die lichtdurchlässigen Unterbrechungen einer Amplitudengitter-Überstruktur bestimmte Phasengitter-Substrukturen mit definierten phasenschiebenden Wirkungen integriert werden etc..

Im Fall des Einsatzes eines Phasengitters kann neben der jeweiligen Teilungsperiode in Abhängigkeit des optischen Abtastprinzipes auch der Phasenhub Δϕ definiert eingestellt werden; so ist es etwa möglich, z.B. den Phasenhub als Δϕ = 90° oder Δϕ = 180° zu wählen usw.

In einer weiteren Alternative zur gezeigten Variante des Blendenplättchens gemäß Figur 1 und 2 kann schließlich vorgesehen werden, die Blendenstruktur 3 nicht auf der Oberseite des Blendenplättchens anzuordnen, sondern auf dessen Unterseite, d.h. auf derjenigen Seite, die dem Substrat 4 zugewandt ist. Derart ist ein verbesserter Schutz der jeweiligen Blendenstruktur 3 gegenüber eventuellen mechanischen Einflüssen gewährleistet, beispielsweise gegenüber der Beschädigung durch einen gegenüberliegenden Codeträger in einer Anordnung wiesie z.B. in Figur 3 nachfolgend noch erläutert wird.
Ferner hat das Bauteil 1 ein plattenförmiges transparentes Substrat 4, welches vorzugsweise aus Kunststoff, Glas oder aus anderen dafür geeigneten Materialien ist, das unten mit Leiterbahnen 5 beschichtet ist. Die Leiterbahnen 5 sind zu einem Rand 6 des Substrats 4 geführt, an dem sie kontaktiert werden können. Ihre inneren Enden sind den Kontaktstellen eines optoelektronischen Chips 7 zugeordnet. Der Chip 7 ist mit bekannten Verbindungstechnologien, z.B. mittels Goldbumps 8, an den inneren Enden der Leiterbahnen 5 befestigt und mit diesen elektrisch leitend verbunden. Dabei sind die vier lichtempfindlichen Sensorflächen 9 des optoelektronischen Sensorchips nach oben gerichtet, das heißt zum Substrat 4 hin.

Oben ist das Substrat 4 mit dem Blendenplättchen 2 verbunden, beispielsweise durch Kleben. Dabei ist in diesem Beispiel jede seiner vier Schlitzgruppen einer lichtempfindlichen Sensorfläche 9 zugeordnet, das heißt einer Senkrechten durch diese Fläche.

In einer weiteren Ausführungsform kann ergänzend zu der in Figur 1 und 2 dargestellten Variante in einem Substrat aus einem geeigneten Kunststoffmaterial vorgesehen werden optische Elemente anzuordnen. Hierbei kann es sich beispielsweise um ein oder mehrere Kollimatorlinsen handeln, die im Substrat 4 zwischen dem Blendenplättchen 2 und den lichtempfindlichen Sensorflächen 9 angeordnet bzw. integriert sind, um derart eine Fokussierung der von oben einfailenden Strahlung auf die lichtempfindlichen Sensorflächen 9 zu bewirken. Die derart in das Substrat 4 integrierten optischen Elemente sind auf diese Art und Weise besonders gut gegenüber mechanischen Einflüssen geschützt.
Gemäß Figur 3 hat des Wegmeßgerät einen Lichtsender 10, der in einem Träger 11 so gehalten ist, daß sein Lichtstrahl 12 senkrecht auf die Blendenstruktur 3 und die zugeordnete lichtempfindliche Fläche des Sensorchips 7 ausgerichtet ist. Zwischen dem Lichtsender 10 und dem Bauteil 1 befindet sich ein durchsichtiger Codeträger 13, z.B. in Form einer Glasplatte, der eine Codespur 14 mit Hell- und Dunkelfeldern in Form lichtdurchlässiger und lichtundurchlässiger Bereich aufweist, die der Blendenstruktur 3 entsprechen. Die Codespur 14 ist so angeordnet, daß sie bei einer Bewegung des Transmissions-Codeträgers 13 senkrecht zum Lichtstrahl 12 mit ihren Hell- und Dunkelfeldern den Lichtstrahl 12 passiert und diesen moduliert. Im Zusammenwirken mit dem Blendenplättchen 2 liefert der optoelektronische Sensorchip 7 ein stark durchmoduliertes Signal.

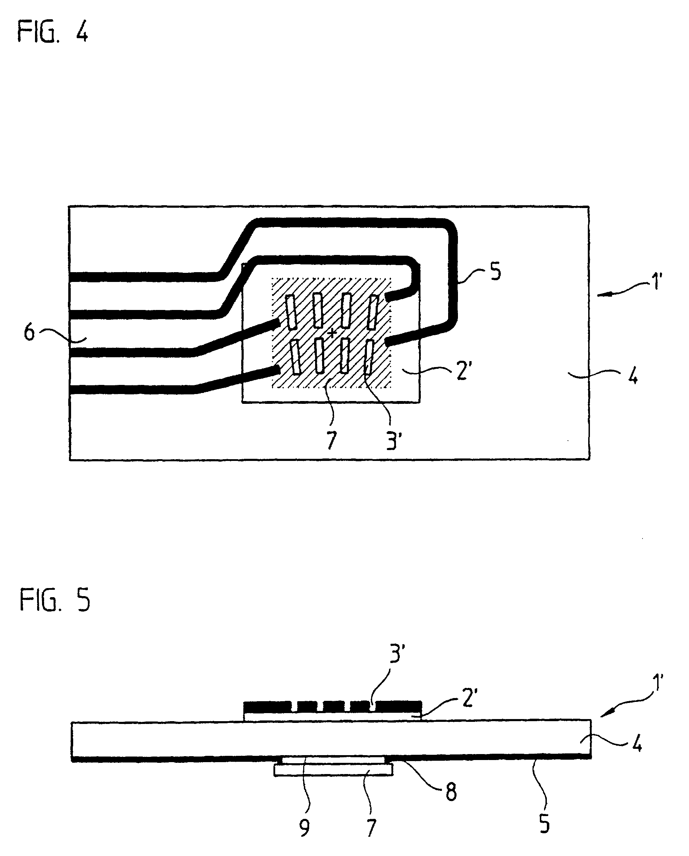

Im Ausführungsbeispiel der Figuren 1 und 2 ist das Blendenplättchen 2 bzw. die Blendenstruktur 3 lediglich vor der lichtempfindlichen Fläche 9 des Sensorchips 7 angeordnet, d.h. die Blendenstruktur 3 fungiert als Abtastgitter. Wie bereits oben angedeutet kann in vollkommen äquivalenter Art und Weise, eine derartige Blendenstruktur 3 auch als Sendegitter vor der lichtemittierenden Fläche einer entsprechenden Lichtquelle bzw. eines Lichtsenders angeordnet werden, z.B. vor einer LED. Eine derartige Anordnung kann beispielsweise bei Auflichtanordnungen von Interesse sein, bei denen sowohl die Lichtquelle als auch die lichtempfindlichen Sensorchips allesamt auf einer Seite in Bezug auf den jeweiligen Reflexions-Codeträger angeordnet sind. Der entsprechende Reflexions-Codeträger besteht hierbei in bekannter Art und Weise aus einer periodischen Anordnung von Hell- und Dunkelfeldern in Form reflektierender und nicht-reflektierender Bereiche.
Das Bauteil 1' gemäß Figur 4 und 5 unterscheidet sich von der vorherigen lediglich durch die Blendenstruktur 3 des Blendenplättchens 2. Diese ist im Hinblick auf einen Einsatz im Winkel- oder Rotationsmeßgerät mit Schlitzen ausgebildet, die auf eine Drehachse ausgerichtet sind. Es kommt jedoch dieselbe Flip-Chip-Montage 4, 5, 7, 8 wie bei dem vorangegangenen Ausführungsbeispiel zum Einsatz.

Das Bauteil 1' wird in einer ähnlichen Anordnung wie in Figur 3 eingesetzt, wobei jedoch der translatorisch bewegte Codeträger durch einen rotatorisch bewegten Codeträger mit auf einer Kreisbahn angeordneten Codespur ersetzt ist.

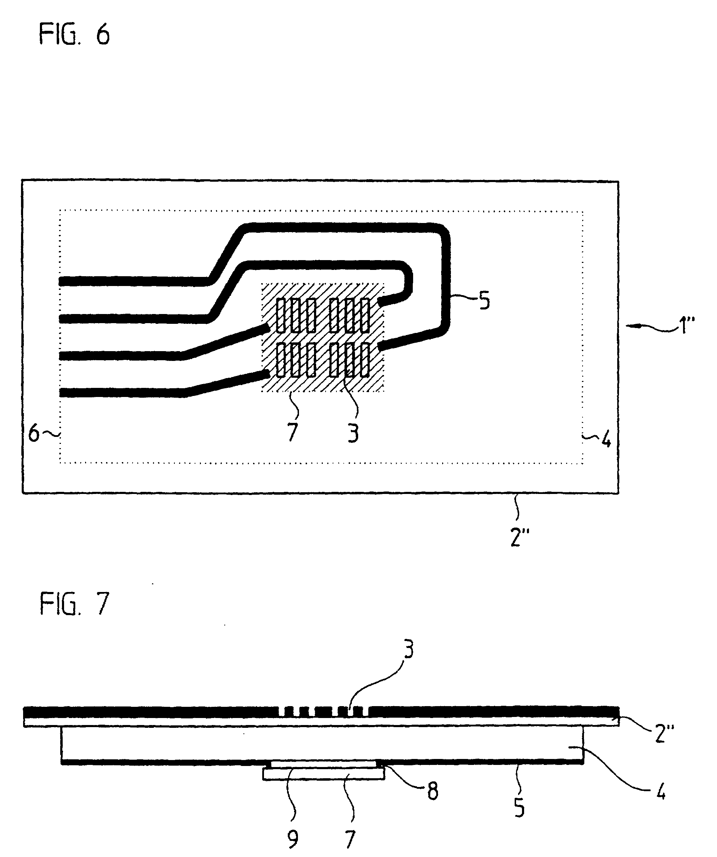

Das Bauteil 1" gemäß Figur 6 und 7 unterscheidet sich von dem Bauteil 1 gemäß Figur 1 bis 3 lediglich dadurch, daß das Blendenplättchen 2" seitlich überall etwas über das transparente Substrat 4 übersteht. Das begünstigt die Ausrichtung der Blendenstruktur 3 auf einen Codeträger. Das Bauteil 1" kann statt des Bauteils 1 in einer Anordnung gemäß Figur 3 eingesetzt werden.

## Patentansprüche

1. Optoelektronisches Weg-, Winkel- oder Rotationsmeßgerät mit
- einem beleuchteten oder durchleuchteten Codeträger (13), der wenigstens eine Codespur (14) mit reflektierenden und nichtreflektierenden bzw. durchlässigen und nicht-durchlässigen Hell- und Dunkelfeldern hat und
- einer im Weg des vom Codeträger (13) modulierten Lichtes und/oder im Weg des auf den Codeträger (13) gelangenden Lichtes angeordneten Blendenstruktur (3) und
- einem transparenten Substrat (4), welches mindestens einen der Blendenstruktur (3) zugewandten optoelektronischen Sensorchip (7) trägt,
**dadurch gekennzeichnet,**
**dass** die Blendenstruktur (3) auf einem Blendenplättchen (2) angeordnet und das Blendenplättchen (2) mit dem Substrat (4) verbunden ist,

2. Gerät nach Anspruch 1, **dadurch gekennzeichnet, dass** das Blendenplättchen (2) aus Glas, Kunststoff oder Metall ist.

3. Gerät nach Anspruch 1 oder 2, **dadurch gekennzeichnet, dass** das Blendenplättchen (2) eine die Blendenstruktur (3) bildende Beschichtung, Ritzung, Durchbrechung oder Bearbeitung aufweist.

4. Gerät nach einem der Ansprüche 1 bis 3, **dadurch gekennzeichnet, dass** das Biendenplättchen (2") mindestens einen Überstand über das transparente Substrat (4) mit definierten Rändern bezüglich der Blendenkontur (3) aufweist, die ein Ausrichten der Blendenstruktur (3) ermöglichen.

5. Gerät nach einem der Ansprüche 1 bis 4, **dadurch gekennzeichnet, dass** das Blendenplättchen (2) und das transparente Substrat (4) durch Kleben miteinander verbunden ist.

6. Gerät nach einem der Ansprüche 1 bis 5, **dadurch gekennzeichnet, dass** das Blendenplättchen auswechselbar mit dem transparenten Substrat (4) verbunden ist.

7. Gerät nach einem der Ansprüche 1 bis 6, **dadurch gekennzeichnet, dass** das transparente Substrat (4) Leiterbahnen (5) aufweist und der optoelektronische Sensorchip (7) an seinen Kontaktstellen mit den Leiterbahnen (5) verbunden ist.

8. Gerät nach Anspruch 1, **dadurch gekennzeichnet, dass** die Blendenstruktur (3) als Abfolge von lichtdurchlässigen und lichtundurchlässigen Bereichen ausgebildet ist.

9. Gerät nach Anspruch 1, **dadurch gekennzeichnet, dass** die Blendenstruktur (3) als Phasengitter ausgebildet ist.

10. Gerät nach Anspruch 1, **dadurch gekennzeichnet, dass** die Blendenstruktur auf derjenigen Seite des Blendenplättchens angeordnet ist, die dem transparenten Substrat zugewandt ist.

11. Gerät nach Anspruch 1, **dadurch gekennzeichnet, dass** im Substrat zwischen der Blendenstruktur und dem optoelektronischen Sensorchip mindestens ein optisches Element angeordnet ist.

12. Gerät nach Anspruch 11, **dadurch gekennzeichnet, dass** das optische Element als Kollimatorlinse ausgebildet ist.

13. Gerät nach Anspruch 1, **dadurch gekennzeichnet, dass** mit dem Substrat desweiteren ein Lichtsender verbunden ist, dessen lichtemittierende Fläche ebenfalls einer Blendenstruktur zugewandt ist.

14. Baukastensystem für ein optoelektronisches Weg-, Winkel- oder Rotationsmeßgerät gemäß einem der Ansprüche 1 bis 13, **dadurch gekennzeichnet, dass** es Blendenplättchen (2, 2', 2") mit unterschiedlichen Strukturen und zum Verbinden mit diesen Blendenplättchen (2, 2', 2") baugleiche Zusammensetzungen mit einem transparenten Substrat (4) und einem daran angeordneten Sensorchip aufweist.

## Claims

1. Optoelectronic linear, angular, or rotary position encoder comprising
- an illuminated or transilluminated code carrier (13), which includes at least one code track (14) having reflecting and non-reflecting, or respectively, transparent and opaque light and dark fields; and
- an aperture structure (3), which is disposed in the path of the light modulated by the code carrier (13) and/or in the path of the light reaching the code carrier (13); and
- a transparent substrate (4), which supports at least one optoelectronic sensor chip (7) facing the aperture structure (3), **characterised in that**
the aperture structure (3) is arranged on an aperture platelet (2), and the aperture platelet (2) is joined to the substrate (4).

2. Device according to Claim 1, **characterised in that** the aperture platelet (2) is made of glass, plastic or metal.

3. Device according to Claim 1 or 2, **characterised in that** the aperture platelet (2) has a coating, scribe line, perforation, or machining forming the aperture structure (3).

4. Device according to one of Claims 1 to 3, **characterised in that** the aperture platelet (2") has at least one projection beyond the transparent substrate (4) with edges defined with respect to the aperture contour (3), making it possible to align the aperture structure (3).

5. Device according to one of Claims 1 to 4, **characterised in that** the aperture platelet (2) and the transparent substrate (4) are joined to one another by bonding.

6. Device according to one of Claims 1 to 5, **characterised in that** the aperture platelet is interchangeably joined to the transparent substrate (4).

7. Device according to one of Claims 1 to 6, **characterised in that** the transparent substrate (4) has printed conductors (5), and the optoelectronic sensor chip (7) is connected at its contact points to the printed conductors (5).

8. Device according to Claim 1, **characterised in that** the aperture structure (3) is designed as a sequence of transparent and opaque regions.

9. Device according to Claim 1, **characterised in that** the aperture structure (3) is designed as a phase grating.

10. Device according to Claim 1, **characterised in that** the aperture structure is arranged on the side of the aperture platelet facing the transparent substrate.

11. Device according to Claim 1, **characterised in that** at least one optical element is arranged in the substrate between the aperture structure and the optoelectronic sensor chip.

12. Device according to Claim 11, **characterised in that** the optical element is designed as a collimator lens.

13. Device according to Claim 1, **characterised in that** additionally connected to the substrate is a light transmitter, the light-emitting surface of which likewise faces an aperture structure.

14. Unit construction system for an optoelectronic linear, angular, or rotary position encoder according to one of Claims 1 to 13, **characterised in that** it comprises aperture platelets (2, 2', 2") having different structures and, for purposes of connection to these aperture platelets (2, 2', 2"), has assembled structures, similar in construction, having a transparent substrate (4) and a sensor chip arranged thereon.

## Revendications

1. Appareil opto-électronique de mesure de distance, d'angle ou de rotation comportant
- un support de code (13) éclairé, à lumière réfléchie ou à lumière transmise, qui porte au moins une piste de code (14) avec des zones réfléchissantes et non-réflechissantes ou des zones claires et des zones sombres respectivement translucides et non-translucides
- une structure de masque (3) disposée sur le trajet de la lumière modulée par le support de code (13) et/ou sur le trajet de la lumière arrivant sur le support de code (13),
- un substrat (4) transparent qui porte au moins un détecteur CCD (7) opto-électronique dirigé vers la structure de masque (3),
**caractérisé en ce que**
- la structure de masque (3) est disposée sur une plaquette de masque (2) et **en ce que** la plaquette de masque (2) est liée au substrat (4).

2. Appareil selon la revendication 1, **caractérisé en ce que** la plaquette de masque (2) est en verre, en matière plastique ou en métal.

3. Appareil selon la revendication 1 ou 2, **caractérisé en ce que** la plaquette de masque (2) comporte un revêtement, des stries, une ouverture ou un usinage qui forme la structure de masque (3).

4. Appareil selon une des revendications 1 à 3, **caractérisé en ce que** la plaquette de masque (2") présente au moins un dépassement sur le substrat (4) transparent par des bords définis par rapport au contour du masque (3), qui permettent un alignement de la structure de masque (3).

5. Appareil selon une des revendications 1 à 4, **caractérisé en ce que** la plaquette de masque (2) et le substrat (4) sont liés l'un à l'autre par collage.

6. Appareil selon une des revendications 1 à 5, **caractérisé en ce que** la plaquette de masque est liée de manière séparable au substrat (4) transparent.

7. Appareil selon une des revendications 1 à 6, **caractérisé en ce que** le substrat (4) transparent comporte des pistes conductrices (5) et que le détecteur CCD (7) opto-électronique, au niveau de ses points de contact est lié aux pistes conductrices (5).

8. Appareil selon la revendication 1, **caractérisé en ce que** la structure de masque (3) est formée d'une succession de zones translucides et de zones non-translucides.

9. Appareil selon la revendication 1, **caractérisé en ce que** la structure de masque (3) est conformée en réseau de phase.

10. Appareil selon la revendication 1, **caractérisé en ce que** la structure de masque est disposée sur la face de la 1 de masque qui est tournée vers le substrat transparent.

11. Appareil selon la revendication 1, **caractérisé en ce qu'**au moins un élément optique est disposé entre la structure de masque et le détecteur CCD opto-électronique.

12. Appareil selon la revendication 11, **caractérisé en ce que** l'élément optique est une lentille de collimation.

13. Appareil selon la revendication 1, **caractérisé en ce qu'**un émetteur de lumière est lié au substrat, émetteur dont la surface émettrice est elle aussi tournée vers une structure de masque.

14. Système modulaire pour un appareil opto-électronique de mesure de distance, d'angle ou de rotation selon une des revendications 1 à 13, **caractérisé en ce qu'**il comporte des plaquettes de masque (2, 2', 2") avec des structures différentes et à relier à ces plaquettes de masques (2, 2', 2") des modules identiques comprenant un substrat (4) transparent et un détecteur CCD disposé sur celui-ci.
